# FASCICULE DE BREVET EUROPEEN

(11) **EP 3 418 121 B1**
(45) Date de publication et mention de la délivrance du brevet: **11.09.2019**
(21) Numéro de dépôt: 18173140.7
(22) Date de dépôt: 18.05.2018
(51) Int. Cl.: B60Q 9/00, B60R 1/00, G08G 1/16

(54) **DISPOSITIF POUR AFFICHER UN DÉBATTEMENT D'UNE PORTIÈRE D'UN VÉHICULE ET PROCÉDÉ ASSOCIÉ**
VORRICHTUNG ZUM ANZEIGEN DES WEGS EINER FAHRZEUGTÜR, UND ENTSPRECHENDES VERFAHREN
DEVICE FOR DISPLAYING A MOTION OF A VEHICLE DOOR AND ASSOCIATED METHOD

(30) Priorité: 19.06.2017 FR 1755558
(43) Date de publication de la demande: 26.12.2018
(73) Titulaire: RENAULT s.a.s., 92100 Boulogne-Billancourt (FR)
(72) Inventeur: AMBROISE, Stephanie, 78140 VELIZY VILLACOUBLAY (FR)

(56) Documents cités:
- EP-A1- 2 456 203
- DE-A1-102008 034 606
- JP-A- 2012 001 210
- KR-A- 20140 080 048
- US-A1- 2003 040 851
- US-A1- 2013 113 614
- US-A1- 2016 208 537

## Description

### DOMAINE TECHNIQUE AUQUEL SE RAPPORTE L'INVENTION

La présente invention concerne de manière générale les aides offertes aux conducteurs de véhicules automobiles.

Elle concerne plus particulièrement un dispositif d'aide pour un usager d'un véhicule, permettant d'afficher un débattement d'une portière du véhicule, le dispositif comprenant un capteur d'images à disposer sur un flanc du véhicule, une unité de traitement électronique, et un écran d'affichage, l'unité de traitement étant programmée pour commander l'acquisition par le capteur d'images d'une vue d'un environnement latéral du véhicule.

L'invention concerne également un procédé associé d'aide pour un usager du véhicule.

### ARRIERE-PLAN TECHNOLOGIQUE

Les véhicules automobiles produits actuellement sont fréquemment équipés d'une caméra arrière reliée à un écran d'affichage pour, lorsque le véhicule recule, afficher sur l'écran une image de l'environnement arrière du véhicule. Ce système permet au conducteur de repérer visuellement des obstacles situés derrière le véhicule.

Il est connu aussi du document US 2013/113614 de munir un véhicule automobile de plusieurs caméras, permettant de construire une image virtuelle du véhicule et de son environnement, vus de dessus. Ce véhicule comprend également un écran pour l'affichage de cette vue de dessus (ou « bird view » en anglais). Sur cette vue de dessus, il est prévu de représenter un secteur angulaire correspondant à une zone de dégagement nécessaire pour ouvrir l'une des portières du véhicule automobile, et, en cas de détection d'obstacle dans cette zone de dégagement, de faire clignoter ce secteur angulaire.

Mais dans une telle vue de dessus, le véhicule est représenté depuis un point de vue éloigné, si bien que les obstacles situés dans son voisinage ne sont représentés qu'avec peu de détails. Il est alors difficile pour le conducteur, à partir de la vue affichée, de détecter visuellement la présence de ces obstacles et de décider jusqu'à quel angle de débattement la portière peut être ouverte sans risque de collision. En outre, à partir d'une telle vue de dessus (du fait du point de vue adopté pour représenter l'environnement du véhicule), il est difficile d'évaluer visuellement la hauteur des obstacles situés au voisinage du véhicule. Il peut donc arriver que des obstacles soient considérés à tort comme gênants, du fait de leurs hauteurs réduites (voir aussi JP2012001210A).

### OBJET DE L'INVENTION

Afin de remédier aux inconvénients précités de l'état de la technique, la présente invention propose un dispositif tel que défini en introduction, dans lequel l'unité de traitement électronique est programmée en outre pour :
- élaborer une image à afficher comprenant :
   - un fond représentatif dudit environnement latéral, déterminé en fonction de la vue acquise, et
   - superposée à ce fond, une représentation d'une partie inférieure seulement d'une portière du véhicule, ladite portière étant dans une position d'ouverture, puis
- commander l'affichage, par l'écran d'affichage, de ladite image.

Superposer la représentation de la portière au fond représentant l'environnement latéral du véhicule permet de représenter visuellement, de manière concise, réaliste, et donc immédiatement appréhendable par un conducteur, la position que la portière occuperait dans cet environnement si elle était placée dans sa position d'ouverture.

Autrement formulé, l'image à afficher représente visuellement le résultat d'une simulation basée sur la position que la portière occuperait effectivement dans cet environnement si elle était ouverte. L'usager peut donc facilement appréhender s'il peut ouvrir sa portière sans risque ou non.

Le fait que la représentation de la portière ainsi superposée soit illustrative d'une portion inférieure de la portière seulement permet, tout en représentant l'extension de la portière et la position qu'elle occuperait, qu'une partie la plus étendue possible de l'environnement latéral du véhicule reste visible dans l'image affichée. Autrement formulé, on réduit ainsi avantageusement la portion de l'environnement latéral que pourrait masquer la représentation de la portière. Un maximum d'obstacles reste ainsi visible sur l'image affichée.

Par ailleurs, comme l'image à afficher correspond à l'environnement latéral du véhicule automobile (situé du même côté du véhicule que le dispositif de capture d'image), et non à la totalité d'un environnement entourant ce véhicule, les obstacles présents dans cet environnement latéral sont représentés en détail dans l'image affichée. Par ailleurs, le point de vue adopté pour représenter cet environnement latéral autorise, à partir de l'image affichée, une évaluation visuelle de la hauteur de tels obstacles.

Enfin, l'élaboration d'une telle image nécessite très peu de ressources en termes de puissance de calcul.

D'autres caractéristiques non limitatives et avantageuses du dispositif d'aide conforme à l'invention, prises individuellement ou selon toutes les combinaisons techniquement possibles, sont les suivantes :
- l'unité de traitement électronique est programmée pour que la représentation de la portière, superposée audit fond, présente un niveau de transparence partiel ;
- l'unité de traitement électronique est programmée pour :
   - élaborer d'autres images à afficher comprenant chacune ledit fond, ainsi qu'une représentation de la partie inférieure de la portière superposée à ce fond, la partie inférieure de la portière étant représentée avec un angle d'ouverture différent sur chaque image, et
   - afficher lesdites images à afficher les unes à la suite des autres ;
- l'unité de traitement électronique comporte une mémoire non-volatile dans laquelle sont stockées des données caractéristiques de la géométrie de la portière ;
- l'unité de traitement électronique est programmée pour lire lesdites données dans ladite mémoire, puis élaborer l'image à afficher en fonction de ces données ;
- lesdites données comprennent des coordonnées d'une pluralité de points définissant un volume délimitant la partie inférieure de la portière ;
- l'unité de traitement électronique est programmée pour générer la représentation de partie inférieure de la portière en fonction desdites coordonnées, sous la forme dudit volume ;
- l'unité de traitement est programmée pour élaborer l'image à afficher et pour commander son affichage seulement après réception d'une donnée indiquant qu'une fonctionnalité du véhicule a été actionnée ;
- l'unité de traitement est programmée en outre de sorte que ladite image soit acquise lorsque la portière du véhicule est dans une position de fermeture ;
- le dispositif d'aide comprend des moyens de détermination d'une distance entre le flanc du véhicule et un obstacle ;
- l'unité de traitement électronique est programmée en outre pour :
   - déterminer, en fonction de ladite distance, un écart qui séparerait l'obstacle et la portière si cette portière était effectivement placée dans la position d'ouverture correspondant à un angle d'ouverture donné,
   - comparer cet écart à un seuil prédéterminé, et, si cet écart est inférieur au seuil,
   - élaborer un message d'alerte ;
- le dispositif d'aide comprend des moyens de détermination d'une hauteur sur laquelle s'étend ledit obstacle ;
- l'unité de traitement électronique est programmée en outre pour :
   - comparer ladite hauteur avec une distance séparant le sol et un bord inférieur de la portière, et
   - élaborer le message d'alerte en tenant compte du résultat de la comparaison de ladite hauteur avec la distance séparant le sol et le bord inférieur de la portière.

L'invention concerne également un procédé d'aide pour un usager d'un véhicule, au cours duquel une unité de traitement électronique commande l'acquisition, par un capteur d'images disposé sur un flanc d'un véhicule, d'une vue d'un environnement latéral de ce véhicule, le procédé comprenant en outre les étapes suivantes, exécutées par l'unité de traitement :
- élaboration d'une image à afficher comprenant :
   - un fond représentatif dudit environnement latéral, déterminé en fonction de la vue acquise, et
   - superposée à ce fond, une représentation d'une partie inférieure seulement d'une portière du véhicule, ladite portière étant dans une position d'ouverture, puis
- commande de l'affichage de ladite image par un écran d'affichage,
- détermination d'une distance entre le flanc du véhicule et un obstacle,
- détermination, en fonction de ladite distance, d'un écart qui séparerait l'obstacle et la portière si cette portière était effectivement placée dans la position d'ouverture correspondant à un angle d'ouverture donné,
- détermination d'une hauteur sur laquelle s'étend ledit obstacle,
- comparaison de ladite hauteur avec une distance séparant le sol et un bord inférieur de la portière,
- comparaison de l'écart déterminé avec un seuil prédéterminé, et, si cet écart est inférieur au seuil, élaboration d'un message d'alerte, ladite élaboration tenant compte également du résultat de la comparaison de ladite hauteur avec la distance séparant le sol et le bord inférieur de la portière.

Les caractéristiques optionnelles, décrites plus haut en termes de dispositif, peuvent aussi s'appliquer au procédé qui vient d'être présenté.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un véhicule automobile vu de dessus, équipé d'un dispositif d'aide pour un usager du véhicule mettant en oeuvre les enseignements de l'invention ;
- la figure 2 représente schématiquement un flanc du véhicule automobile de la figure 1 et un obstacle avoisinant ;
- les figures 3 et 4 illustrent la manière dont est représentée une partie inférieure d'une portière du véhicule, dans une image d'un environnement latéral du véhicule élaborée par le dispositif de la figure 1 ;
- les figures 5A à 5C représentent chacune une image de l'environnement latéral du véhicule comprenant une représentation de la partie inférieure de la portière, pour différents angles d'ouverture de la portière ;
- la figure 6 représente schématiquement une image de l'environnement latéral du véhicule comprenant une représentation de la partie inférieure et d'une partie supérieure de la portière du véhicule ;
- la figure 7 illustre l'effet d'un redressement et recadrage d'une image de l'environnement latéral du véhicule ; et
- la figure 8 représente schématiquement des étapes d'un procédé d'aide mis en oeuvre par un dispositif d'aide tel que celui de la figure 1.

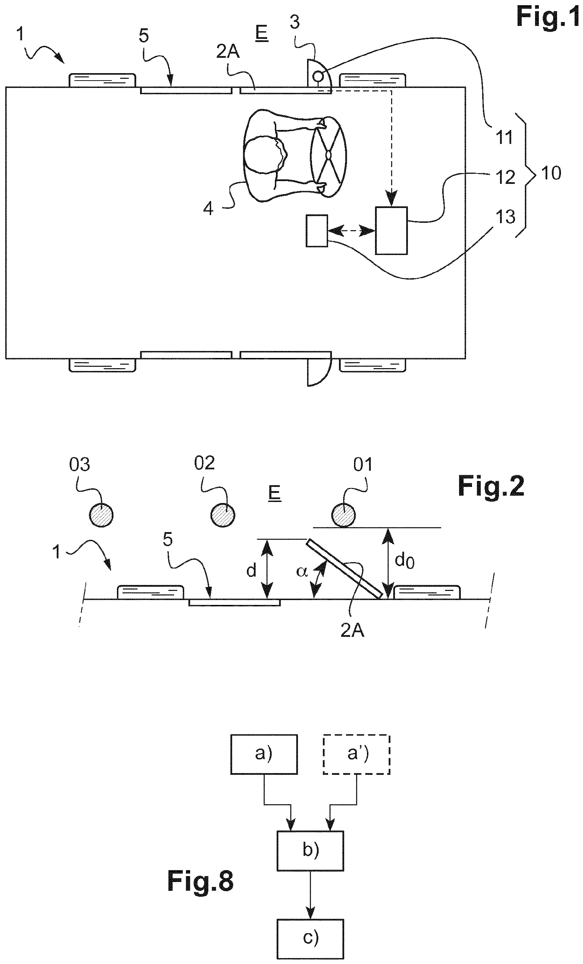

Sur la figure 1, on a représenté schématiquement, vu de dessus, un véhicule 1 automobile équipé d'un dispositif d'aide 10 pour un usager du véhicule, permettant d'afficher un débattement d'une portière 2A du véhicule 1.

Dans le mode de réalisation décrit ci-dessous en référence aux figures, la portière dont le débattement est affiché par le dispositif d'aide 10 est la portière avant du véhicule située du côté du conducteur 4, désigné simplement dans la suite comme « la portière », et portant la référence 2A.

Dans d'autres modes de réalisation, le dispositif d'aide pourrait toutefois être configuré pour afficher le débattement d'une autre portière du véhicule, telle qu'une portière avant passager et/ou une portière arrière.

Quel que soit le mode de réalisation considéré, le dispositif d'aide 10 comprend un capteur d'images 11, disposé sur un flanc 5 du véhicule, du côté de la portière 2A dont le débattement est affichée (donc, ici, du côté conducteur).

Les images capturées par le capteur d'images 11 sont ainsi représentatives d'un environnement latéral E du véhicule, situé ici du côté du conducteur 4. Cet environnement comprend ici, à titre d'exemple, trois poteaux O1, 02 et 03 (figures 2, 5A à 5C, et 6), constituant autant d'obstacles susceptibles d'être percutés par la portière 2A lors de son ouverture.

Le capteur d'images 11 est réalisé ici au moyen d'une caméra vidéo à très grand angle de vue (parfois désignée en anglais par l'expression : « fish-eye caméra » et présentant une focale courte, inférieure à 35mm), pour, dans les images capturées, pouvoir visualiser une partie de l'environnement latéral E très proche du véhicule 1, voire même pour pouvoir visualiser le flanc 5 du véhicule.

Le capteur d'images 11 est disposé plus précisément sur une face inférieure d'un rétroviseur extérieur conducteur 3. Le capteur d'images pourrait toutefois être disposé ailleurs sur ce flanc 5 du véhicule 1, par exemple sur une aile avant, sur un montant du pare-brise, ou sur la portière 2A (ailleurs que sur le rétroviseur précité).

Le dispositif d'aide 10 comprend aussi un écran 13 d'affichage, tel qu'un écran à cristaux liquides, disposé dans le champ de vision d'un conducteur 4 du véhicule, par exemple sur une planche de bord ou au niveau d'une console avant du véhicule 1.

Le dispositif d'aide 10 comprend également une unité de traitement 12 électronique, comportant notamment un processeur et une mémoire non-volatile, apte à exécuter des opérations logiques, en particulier des opérations de traitement d'images. L'unité de traitement 12 est reliée au capteur d'images 11 et à l'écran 13 de façon à pouvoir échanger des données avec ces appareils.

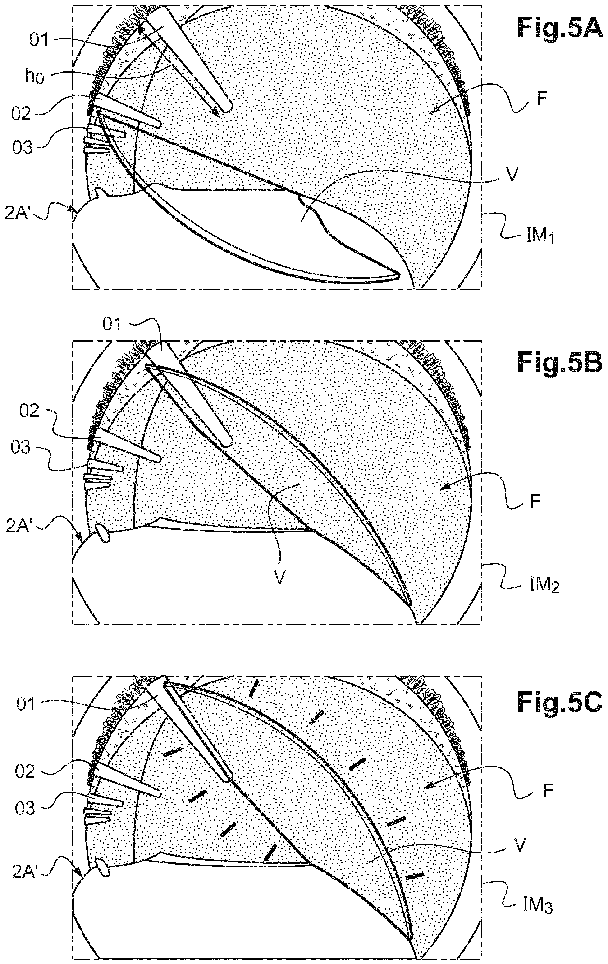

Dans le mode de réalisation décrit ici, l'unité de traitement 12 est programmée pour, suite à l'actionnement d'une fonctionnalité du véhicule 1, par exemple suite au serrage du frein de parking (« frein à main ») :
- élaborer soit une image unique, soit préférentiellement un film comportant une séquence de plusieurs images, telles que les images IM₁ à IM₃ des figures 5A à 5C, montrant les positions successives que la portière 2A occuperait dans l'environnement latéral E du véhicule lors de son ouverture, et
- commander l'écran 13 pour y afficher, les unes à la suite des autres, les images ainsi élaborées.

L'actionnement de la fonctionnalité du véhicule 1, qui déclenche l'élaboration et l'affichage de cette séquence d'images, peut correspondre notamment :
- comme indiqué ci-dessus, au fait de serrer le frein de parking du véhicule 1 (ou au fait d'activer un mode de parking du véhicule),
- au fait de placer la boîte à vitesses au point mort (pour lequel le moteur est découplé du système de transmission),
- à l'actionnement d'une poignée d'ouverture de la portière,
- à l'actionnement d'un bouton de commande positionné par exemple proche de l'écran 13, ou,
- dans le cas où l'écran 13 est un écran tactile, au fait d'appuyer sur une zone de l'écran où est affichée une proposition de déclenchement de l'affichage de ce film (par exemple une zone affichant une expression telle que « vue latérale », ou « vue portière », ou encore « affichage du débattement de la portière »).

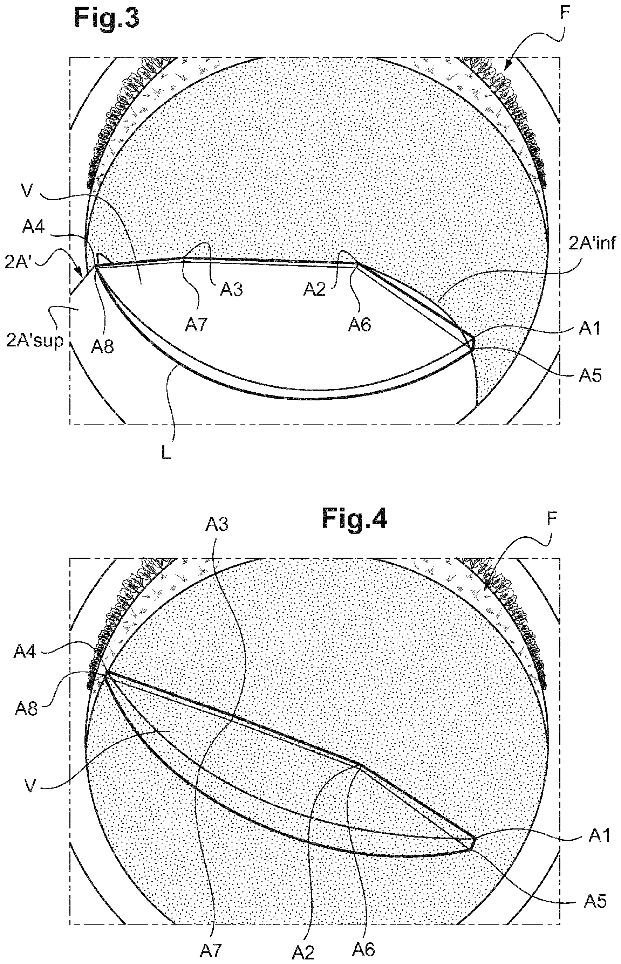

Chaque image élaborée ainsi par l'unité de traitement 12 comprend un fond F (figures 3 à 5C), représentatif de l'environnement E latéral du véhicule 1. Ce fond F est déterminé par l'unité de traitement 12, en fonction d'une vue de cet environnement acquise par le capteur d'images 11. Ici, ce fond F correspond directement à la vue acquise par le capteur d'images 11. Cette vue, commune aux différentes images élaborées, est acquise lorsque la portière 2A est dans une position de fermeture.

Pour cela, on peut prévoir par exemple que l'unité de traitement 12 commande l'acquisition de cette vue dès la réception d'une donnée indiquant que la fonctionnalité du véhicule mentionnée ci-dessus a été actionnée. On pourrait aussi prévoir, en variante, que, parmi un flux de vues de l'environnement latéral reçues continument du capteur d'images 11, l'unité de traitement 12 enregistre l'une de ces vues au moment de l'activation de ladite fonctionnalité, pour l'employer comme fond F des images élaborées ensuite.

Chacune des images mentionnées ci-dessus comprend en outre, superposée au fond F qui vient d'être décrit, une représentation de la portière 2A dans une position d'ouverture donnée. La représentation de cette portière est déterminée en tenant compte de ses dimensions et de sa cinématique réelle (en particulier, en tenant compte du positionnement de son axe de rotation dans le référentiel du véhicule, et de sa longueur, c'est-à-dire de son extension perpendiculairement à cet axe de rotation).

La portière 2A est, sur chaque image, représentée pour un angle d'ouverture α différent (voir figure 2). Par exemple, l'angle d'ouverture est, de l'image IM₁ à IM₃ (figures 5A à 5C), de plus en plus grand. Le nombre d'images de la séquence d'images élaborée par l'unité de traitement peut bien sûr être supérieur à 3 (on verra aussi plus bas que l'unité de traitement pourrait être programmée au contraire pour élaborer une image seulement, montrant la portière en position d'ouverture).

Elaborer et afficher ce film simulant l'ouverture de la portière 2A permet au conducteur 4 d'évaluer un risque de collision éventuelle de cette portière avec un obstacle, lors de son ouverture. Cette disposition aide donc le conducteur à éviter de telles collisions. Les informations, fournies sous forme visuelle par ce film, peuvent en outre s'avérer utiles au conducteur pour prendre une décision de déplacer légèrement le véhicule 1 afin de pouvoir ouvrir plus facilement cette portière.

De manière remarquable, l'unité de traitement 12 électronique est programmée pour que la représentation de ladite portière 2A, qui est superposée au fond F pour élaborer chaque image à afficher, soit illustrative d'une partie inférieure de la portière seulement.

Cette disposition permet, tout en représentant de manière réaliste l'extension de la portière et la position qu'elle occuperait, qu'une partie la plus étendue possible de l'environnement latéral E du véhicule 1 reste visible dans l'image IM₁, IM₂, IM₃ affichée. Un maximum d'obstacles reste ainsi visible sur cette image.

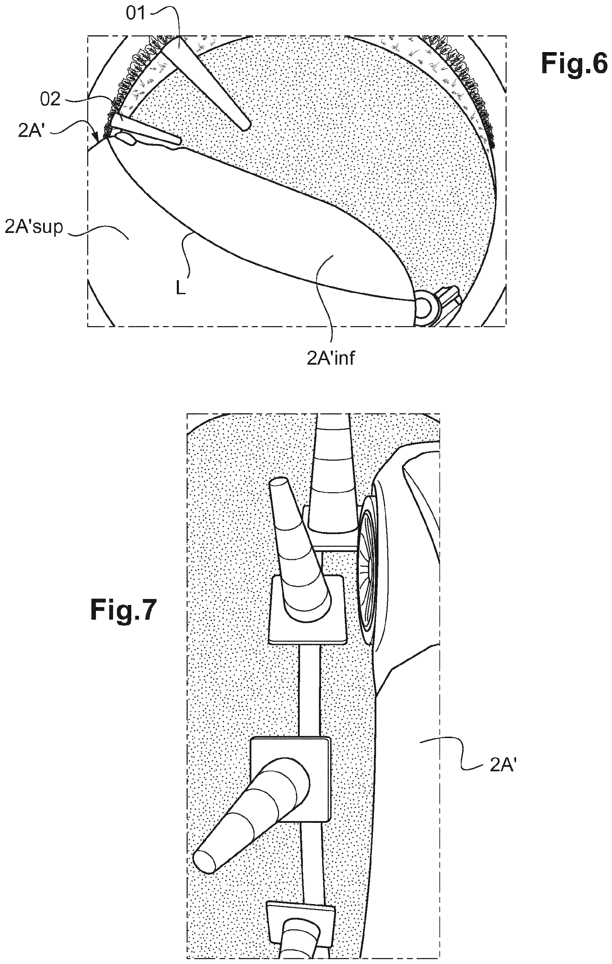

Comme le montrent les figures 3 et 6, la limite L, qui correspond à la frontière séparant la partie inférieure de la portière (celle qui doit être affichée) du reste de la portière, peut être ajustée lors d'une phase d'essais du dispositif d'aide 10 préalable à sa mise en service (essais pouvant être réalisés sous la forme de simulations numériques). Le but est de maximiser l'étendue du champ laissé visible par la partie inférieure de la portière, toute en conservant un caractère facilement appréhendable par le conducteur à la représentation de cette partie inférieure.

La limite L peut varier d'un véhicule à un autre, en fonction de la géométrie de la portière, et peut aussi dépendre de la position occupée par le capteur d'images 11 sur le flanc 5 du véhicule 1. Ici, par exemple, cette limite est située à la hauteur de la poignée extérieure d'ouverture de la portière.

A titre d'illustration, les figures 3 et 6 montrent chacune une image, comparable à l'une des images élaborées par l'unité de traitement 12, mais faisant apparaître toute la portion de la portière 2A située dans le champ de vision du capteur d'images 11, au lieu de faire apparaître seulement la partie inférieure de cette portière (figure 4).

Ainsi, sur les figures 3 et 6, l'image de la portière, qui porte la référence 2A', comprend à la fois une image de sa partie inférieure 2A'_{inf}, et une image de sa partie supérieure 2A'ₛᵤₚ (plus précisément, de la portion de la partie supérieure de la portière qui est située dans le champ de vision de la caméra).

Dans le cas de la figure 3, la portière 2A est dans sa position de fermeture, tandis que dans le cas de la figure 6 elle est partiellement ouverte.

A titre de comparaison, la figure 5A montre l'une des images, IM₁, élaborée par l'unité de traitement pour un angle d'ouverture proche de celui correspondant à la figure 6. Dans l'image IM₁, la partie inférieure de la portière seulement est représentée (sous la forme d'un volume V, comme expliqué en détail plus bas). On constate sur cet exemple que le fait de représenter une partie inférieure seulement de la portière améliore effectivement la visibilité d'ensemble de l'environnement latéral E. Par exemple, le poteau 03 présent dans cet environnement est visible dans l'image IM₁, alors qu'il masqué par l'image 2A' de la portière, dans l'image de la figure 6.

On notera qu'une image 2A' de la portière en position de fermeture est présente dans l'image IM₁ (de même que dans les images IM₂ et IM₃), en plus de la représentation (V) de la portion inférieure de la portière partiellement ouverte. Cela est du au fait qu'une partie de la portière, même lorsqu'elle est fermée, est incluse dans le champ de vision du capteur d'images 11. Ainsi, comme le fond F employé pour élaborer l'image IM₁ est ici une vue acquise par ce capteur (lorsque la portière était fermée), il intègre une image 2A' de la portière réelle. A titre de comparaison, la figure 4 montre une image comparable à l'image IM₁, mais dans laquelle le fond de l'environnement latéral E a été simplifié, et ne comprend pas l'image 2A' de la portière réelle.

Par ailleurs, afin d'améliorer encore la visibilité de l'environnement latérale E du véhicule 1, l'unité de traitement 12 est programmée pour que la représentation de la partie inférieure de la portière, superposée au fond F mentionné ci-dessus, présente un niveau de transparence partiel (figures 4 et 5A à 5C), typiquement compris entre 10 et 90 % de transparence.

La partie du fond F située, dans l'image à afficher, en arrière-plan de la représentation de la partie inférieure de la portière est alors partiellement visible à travers cette représentation, par transparence.

L'unité de traitement 12 électronique est programmée par ailleurs pour générer la représentation de la partie inférieure de la portière de la manière suivante.

Toute d'abord, des données caractéristiques de la géométrie de la portière 2A sont stockées dans la mémoire non-volatile de l'unité de traitement 12. Ces données sont enregistrées dans cette mémoire lors d'une phase de production ou de configuration du véhicule 1.

C'est ensuite sur la base de ces données que l'unité de traitement 12 élabore les images à afficher.

Ici, les données précitées comprennent plus précisément des coordonnées d'une pluralité de points A1, A2, ..., A8 définissant un volume V délimitant la partie inférieure de la portière (figure 3).

L'unité de traitement 12 est programmée alors pour générer la représentation de la partie inférieure de la portière en fonction des coordonnées de ces points, sous la forme du volume V précitée.

L'unité de traitement est programmée plus précisément, ici, pour représenter la partie inférieure de la portière sous la forme d'un parallélépipède. Les points A1, A2, ..., A8 définissant le volume V sont alors les huit sommets de ce parallélépipède. Cette représentation simplifiée de la partie inférieure de la portière permet une détermination rapide des images à afficher, même si l'unité de traitement ne dispose que d'une puissance de calcul réduite. On pourrait toutefois prévoir, en variante, de recourir à un volume de forme plus complexe, approchant mieux la forme réelle de la portière, le nombre de points nécessaires pour définir ce volume étant alors plus élevé (supérieur à 8).

Les coordonnées des huit sommets A1, A2, ..., A8 du parallélépipède, enregistrées dans la mémoire non-volatile sont exprimées dans un repère lié au véhicule 1. Elles définissent par exemple les positions des sommets A1, A2, ..., A8 lorsque la portière est fermée.

L'unité de traitement est programmée alors pour, lors de l'élaboration de chaque image à afficher :
- déterminer (par un calcul de rotation) de nouvelles coordonnées repérant, dans le repère lié au véhicule 1, les sommets A1, A2, ..., A8 du parallélépipède lorsque la portière est dans une position d'ouverture correspondant à un angle d'ouverture α donné ; et
- déterminer ensuite d'autres coordonnées, repérant les sommets A1, A2, ..., A8 dans la vue acquise par le capteur d'images 11, pour obtenir ainsi ladite représentation de la partie inférieure de la portière.

Les autres coordonnées mentionnées ci-dessus sont obtenues par un calcul de projection, tenant compte des caractéristiques optiques du capteur d'images 11, de manière à ce que ladite représentation illustre fidèlement la manière dont ce volume V serait imagé par le capteur d'image 11 s'il était effectivement présent dans l'environnement latéral. Autrement formulé, la représentation de la partie inférieure de la portière est alors une image (virtuelle) du parallélépipède précité, tel qu'il serait visualisé au moyen du capteur d'images 11.

L'unité de traitement 12 est programmée ici pour, à chaque fois que la séquence d'images IM₁, IM₂, IM₃ montrant les positions d'ouvertures successives que la portière 2A est élaborée, générer pour chacune de ces images la représentation de la partie inférieure de la portière, au moyen des calculs mentionnés ci-dessus.

On pourrait toutefois prévoir, en variante, que les représentations de la partie inférieure de la portière, pour les différents angles d'ouverture envisagés, soient générées et stockées dans la mémoire non-volatile de l'unité de traitement préalablement à la mise en service du véhicule. Les données mentionnées ci-dessus, caractéristiques de la géométrie de la portière et en fonction desquelles sont élaborées les images à afficher, correspondent alors directement auxdites représentations. Les images à afficher sont dans ce cas élaborées directement en superposant ces représentations préenregistrées à la vue acquise par le capteur d'images.

Dans le cadre de cette variante, les représentations de la partie inférieure de la portière peuvent par exemple être générées au moyen d'un programme évolué de simulation graphique ou de conception mécanique exécuté sur un ordinateur externe au véhicule, avant d'être stockées dans la mémoire non volatile de ce véhicule. Cela permet d'obtenir des représentations de la portière particulièrement réalistes et détaillées. En revanche, ces représentations préenregistrées sont spécifiques à un type de véhicule donné, et à une position et un type de capteur d'images.

Au contraire, générer, comme ici, les représentations de la partie inférieure de la portière « à la volée », à chaque fois que les images à afficher sont élaborées, rend le dispositif d'aide 10 particulièrement facile à reconfigurer, d'un véhicule à un autre, ou d'un capteur d'images à un autre. Une telle reconfiguration peut en effet être réalisée en changeant seulement les valeurs de quelques paramètres, tels que les coordonnées de points mentionnées ci-dessus, dans la mémoire non-volatile de l'unité de traitement.

De manière optionnelle, le dispositif d'aide 10 peut comprendre en outre des moyens de détermination (non représentés) d'une distance do entre le flanc 5 du véhicule 1 et un obstacle, tel que le poteau O1 (figure 2).

Ces moyens de détermination peuvent comprendre par exemple un capteur à ultrasons ou un capteur optique disposé sur le flanc 5 du véhicule 1 (du même côté du véhicule que le capteur d'images 11). Ils peuvent aussi comprendre un ensemble d'instructions de traitement d'image, stocké dans la mémoire de l'unité de traitement, permettant, lorsqu'elles sont exécutées par le processeur, de déterminer ladite distance do par analyse de la vue acquise par le capteur d'images 11.

On peut prévoir alors que l'unité de traitement 12 soit programmée de sorte à :
- pour chaque image IM₁, IM₂, IM₃ à élaborer, déterminer, en fonction de ladite distance do, un écart e qui séparerait l'obstacle et la portière 2A si cette portière était effectivement placée dans la position d'ouverture correspondant à cette image,
- comparer cet écart e à un seuil eₘᵢₙ prédéterminé, et, si cet écart e est inférieur au seuil eₘᵢₙ,
- élaborer un message d'alerte.

Pour déterminer l'écart e, l'unité de traitement peut par exemple :
- calculer, en fonction de l'angle d'ouverture α associé à l'image considérée, et des caractéristiques géométriques de la portière 2A, une distance de débattement d séparant une extrémité arrière de la portière 2A et le flanc 5 du véhicule 1 (C.f. : figure 2), puis
- calculer l'écart e comme étant égal à la différence entre la distance do et la distance de débattement d : e = do - d .

Quant au seuil eₘᵢₙ, il peut par exemple être compris entre 5 et 15 centimètres.

L'unité de traitement 12 peut être programmée pour élaborer le message d'alerte sous la forme d'un signal sonore et/ou sous forme visuelle.

L'unité de traitement d'image peut en particulier être programmée pour déterminer chaque image à afficher de manière à y représenter visuellement le message d'alerte, lorsque l'écart e est inférieur au seuil eₘᵢₙ. L'ensemble des informations utiles au conducteur, relatives à l'ouverture de la portière 2A, sont alors disponibles, de manière avantageusement concise, sur l'écran d'affichage 11.

Pour faire apparaître le message d'alerte dans l'image à afficher, l'unité de traitement peut par exemple y représenter la partie inférieure de la portière de manière différente lorsque e > eₘᵢₙ, et lorsque e < eₘᵢₙ. A titre d'exemple, la partie inférieure de la portière peut être représentée en rouge lorsque l'écart e est inférieur au seuil eₘᵢₙ, et en vert sinon. La partie inférieure de la portière pourrait aussi être entourée d'un symbole spécifique lorsque l'écart e est inférieur au seuil eₘᵢₙ (comme c'est le cas pour l'image IM₃), et être représentée sans ce symbole sinon (cas des images IM₁ et IM₂).

On notera par ailleurs que des obstacles proches du véhicule 1, mais de faible hauteur, ne gênent pas l'ouverture de la portière, et qu'il convient donc, en présence de tels obstacles, de ne pas élaborer de message d'alerte.

Aussi, afin de produire le message d'alerte de manière aussi pertinente que possible, le dispositif d'aide 10 est muni ici de moyens de détermination d'une hauteur ho (figure 5A) sur laquelle s'étend ledit obstacle.

Ces moyens de détermination sont par exemple les mêmes que ceux permettant de déterminer la distance do.

L'unité de traitement 12 est alors programmée en outre pour :
- comparer la hauteur ho avec une distance séparant le sol et un bord inférieur de la portière 2A, et
- élaborer le message d'alerte à condition en outre que la hauteur ho soit supérieure à la distance séparant le sol du bord inférieur de la portière 2A.

Ou pourra remarquer que, telles que représentées sur les figures 5A à 5C, les images IM₁, IM₂, IM₃ élaborées par l'unité de traitement 12 présentent une apparence proche d'une vue brute, non traitée, de l'environnement latéral E, telle qu'elle serait acquise par le dispositif de capture d'image 11.

On peut toutefois prévoir que l'unité de traitement 12 soit programmée pour, avant leur affichage, traiter les images élaborées pour qu'elles correspondent chacune à une vue de l'environnement latéral plus proche de ce que verrait directement le conducteur s'il se penchait par la fenêtre de la portière 2A. Pour cela, l'unité de traitement peut par exemple recadrer ces images, et leur appliquer une rotation d'un quart de tour pour obtenir une vue telle que celle représentée sur la figure 7. Dans ce cas, le recadrage ne doit toutefois pas empiéter sur la représentation de partie inférieure de la portière, en position d'ouverture.

Dans une variante non représentée, on pourrait prévoir que le dispositif d'aide comprenne un capteur d'image supplémentaire, disposé sur un autre flanc du véhicule, du côté du passager, l'unité de traitement étant programmée en outre pour élaborer une autre séquence d'images montrant les positions successives que la portière avant passager occuperait lors de son ouverture. Dans le cadre de cette variante, on peut par exemple prévoir que l'unité de traitement soit programmée pour commander l'écran de manière à y afficher simultanément des deux séquences d'images simulant respectivement l'ouverture de la portière conducteur, et celle de la portière passager.

D'autre part, dans d'autres modes de réalisation du dispositif d'aide, l'unité de traitement pourrait être programmée pour élaborer une seule image montant la position qu'occuperait la portière si elle était ouverte, plutôt qu'une séquence complète montrant une ouverture progressive de cette portière.

Par ailleurs, l'élaboration et l'affichage de l'image (ou des images) montrant la position (ou les positions) qu'occuperait la portière si elle était ouverte pourrait être déclenchés autrement que par l'actionnement, par le conducteur, de l'une des fonctionnalités du véhicule. L'élaboration et l'affichage de cette image pourrait par exemple être déclenchés du fait d'une détection, par un capteur du véhicule, d'un obstacle situé à proximité de celui-ci.

L'invention prévoit par ailleurs un procédé d'aide pour un usager d'un véhicule, dont les principales étapes sont représentées sur la figure 8. Ce procédé est mis en oeuvre, ici, par le dispositif d'aide qui a été décrit ci-dessus.

Au cours de ce procédé, l'unité de traitement 12 électronique exécute les étapes suivantes :
a) commande de l'acquisition, par le capteur d'images 11 disposé sur le flanc 5 du véhicule 1, d'une vue de l'environnement latéral E du véhicule 1,
b) élaboration d'une image IM₁, IM₂, IM₃ à afficher comprenant :
   - un fond F représentatif dudit environnement latéral E, déterminé en fonction de la vue acquise, et
   - superposée à ce fond, une représentation V d'une partie inférieure seulement d'une portière 2A du véhicule 1, ladite portière 2A étant dans une position d'ouverture, puis
c) commande de l'affichage de ladite image IM₁, IM₂, IM₃ par l'écran 13 d'affichage.

Dans le mode de réalisation décrit ici, le procédé d'aide comprend également une étape a') de réception, par l'unité de traitement 12, d'une donnée indiquant qu'une fonctionnalité du véhicule a été actionnée.

L'exécution des étapes b) et c) est déclenchée par la réception de cette donnée.

Les différentes opérations mises en oeuvre pour élaborer et afficher lesdites images, qui ont été décrites plus haut en termes de dispositif, peuvent également être effectuées au cours du procédé d'aide qui vient d'être présenté.

## Revendications

1. Dispositif d'aide (10) pour un usager (4) d'un véhicule (1), comprenant un capteur d'images (11) à disposer sur un flanc (5) du véhicule, une unité de traitement (12) électronique, et un écran (13) d'affichage, l'unité de traitement (12) étant programmée pour commander l'acquisition par le capteur d'images (11) d'une vue d'un environnement latéral (E) du véhicule (1), l'unité de traitement (12) étant programmée en outre pour :
- élaborer une image (IM₁, IM₂, IM₃) à afficher comprenant :
- un fond (F) représentatif dudit environnement latéral (E), déterminé en fonction de la vue acquise, et
- superposée à ce fond (F), une représentation (V) d'une partie inférieure seulement d'une portière (2A) du véhicule, ladite portière étant dans une position d'ouverture, puis
- commander l'affichage, par l'écran (13), de ladite image (IM₁, IM₂, IM₃),
**caractérisé en ce que** ledit dispositif d'aide comprend en outre des moyens de détermination d'une distance (do) entre le flanc (5) du véhicule (1) et un obstacle (O1), et l'unité de traitement (12) électronique est programmée en outre pour :
- déterminer, en fonction de ladite distance (do), un écart (e) qui séparerait l'obstacle (O1) et la portière (2A) si cette portière était effectivement placée dans la position d'ouverture correspondant à un angle d'ouverture (α) donné,
- comparer cet écart (e) à un seuil (eₘᵢₙ) prédéterminé, et, si cet écart (e) est inférieur au seuil (eₘᵢₙ),
- élaborer un message d'alerte,
le dispositif comprenant des moyens de détermination d'une hauteur (ho) sur laquelle s'étend ledit obstacle (O1), et l'unité de traitement électronique étant programmée pour :
- comparer ladite hauteur (ho) avec une distance séparant le sol et un bord inférieur de la portière (2A), et
- élaborer le message d'alerte en tenant compte du résultat de la comparaison de ladite hauteur (ho) avec la distance séparant le sol et le bord inférieur de la portière.

2. Dispositif selon la revendication 1, dans lequel l'unité de traitement (12) est programmée pour que la représentation (V) de la portière présente un niveau de transparence partiel.

3. Dispositif selon l'une des revendications 1 et 2, dans lequel l'unité de traitement (12) électronique est programmée pour :
- élaborer d'autres images (IM₁, IM₂, IM₃) à afficher comprenant chacune ledit fond (F) ainsi qu'une représentation (V) de la partie inférieure de la portière (2A) superposée à ce fond, la partie inférieure de la portière étant représentée avec un angle d'ouverture (a) différent sur chaque image, et
- afficher lesdites images (IM₁, IM₂, IM₃) les unes à la suite des autres.

4. Dispositif selon l'une des revendications 1 à 3, dans lequel l'unité de traitement (12) comporte une mémoire non-volatile dans laquelle sont stockées des données caractéristiques de la géométrie de la portière (2A), l'unité de traitement étant programmée pour lire lesdites données dans ladite mémoire, puis élaborer l'image (IM₁, IM₂, IM₃) à afficher en fonction de ces données.

5. Dispositif selon la revendication 4, dans lequel :
- lesdites données comprennent des coordonnées d'une pluralité de points (A1, A2, A3, A4, A5, A6, A7, A8) définissant un volume (V) délimitant la partie inférieure de la portière (2A), et dans lequel
- l'unité de traitement (12) électronique est programmée pour générer la représentation de partie inférieure de la portière en fonction desdites coordonnées, sous la forme dudit volume (V).

6. Dispositif selon l'une des revendications 1 à 5, dans lequel l'unité de traitement (12) est programmée pour élaborer l'image (IM₁, IM₂, IM₃) à afficher et pour commander son affichage seulement après réception d'une donnée indiquant qu'une fonctionnalité du véhicule a été actionnée.

7. Dispositif selon l'une des revendications 1 à 6, dans lequel l'unité de traitement (12) est programmée de sorte que ladite vue soit acquise lorsque la portière (2A) du véhicule (1) est dans une position de fermeture.

8. Procédé d'aide pour un usager (4) d'un véhicule (1), au cours duquel une unité de traitement (12) électronique commande l'acquisition, par un capteur d'images (11) disposé sur un flanc (5) du véhicule (1), d'une vue d'un environnement latéral (E) de ce véhicule,
comprenant les étapes suivantes, exécutées par l'unité de traitement (12)
- élaboration d'une image (IM₁, IM₂, IM₃) à afficher comprenant :
- un fond (F) représentatif dudit environnement latéral (E), déterminé en fonction de la vue acquise, et
- superposée à ce fond (F), une représentation (V) d'une partie inférieure seulement d'une portière (2A) du véhicule, ladite portière étant dans une position d'ouverture, puis
- commande de l'affichage de ladite image (IM₁, IM₂, IM₃) par un écran (13) d'affichage,
**caractérisé en ce qu'**il comporte en outre les étapes de :
- détermination d'une distance (do) entre le flanc (5) du véhicule (1) et un obstacle (O1),
- détermination, en fonction de ladite distance (do), d'un écart (e) qui séparerait l'obstacle (O1) et la portière (2A) si cette portière était effectivement placée dans la position d'ouverture correspondant à un angle d'ouverture (α) donné,
- détermination d'une hauteur (ho) sur laquelle s'étend ledit obstacle (O1),
- comparaison de ladite hauteur (ho) avec une distance séparant le sol et un bord inférieur de la portière (2A),
- comparaison de l'écart (e) déterminé avec un seuil (eₘᵢₙ) prédéterminé, et, si cet écart (e) est inférieur au seuil (eₘᵢₙ), élaboration d'un message d'alerte, ladite élaboration tenant compte également du résultat de la comparaison de ladite hauteur (ho) avec la distance séparant le sol et le bord inférieur de la portière.

## Patentansprüche

1. Hilfsvorrichtung (10) für einen Benutzer (4) eines Fahrzeugs (1), umfassend eine Bildaufnahmevorrichtung (11), die an einer Flanke (5) des Fahrzeugs anzuordnen ist, eine elektronische Verarbeitungseinheit (12) und einen Anzeigebildschirm (13), wobei die Verarbeitungseinheit (12) dafür programmiert ist, die Erfassung einer Ansicht einer Seitenumgebung (E) des Fahrzeugs (1) durch die Bildaufnahmevorrichtung (11) zu steuern, wobei die Verarbeitungseinheit (12) ferner dafür programmiert ist:
- ein Bild (IM₁, IM₂, IM₃) zu erstellen, das anzuzeigen ist, umfassend:
- einen Hintergrund (F), der die Seitenumgebung (E) darstellt, der in Abhängigkeit von der erfassten Ansicht bestimmt wird, und
- eine Darstellung (V) nur eines unteren Teils einer Tür (2A) des Fahrzeugs, die über diesen Hintergrund (F) gelegt ist, wobei sich die Tür in einer Öffnungsposition befindet, dann
- die Anzeige des Bilds (IM₁, IM₂, IM₃) durch den Bildschirm (13) zu steuern, **dadurch gekennzeichnet, dass** die Hilfsvorrichtung ferner Mittel zum Bestimmen einer Distanz (do) zwischen der Flanke (5) des Fahrzeugs (1) und einem Hindernis (O1) umfasst und die elektronische Verarbeitungseinheit (12) ferner dafür programmiert ist:
- in Abhängigkeit von der Distanz (do) einen Abstand (e) zu bestimmen, der das Hindernis (O1) und die Tür (2A) trennen würde, wenn diese Tür tatsächlich in der Öffnungsposition platziert wäre, die einem bestimmten Öffnungswinkel (α) entspricht,
- diesen Abstand (e) mit einer vorbestimmten Schwelle (eₘᵢₙ) zu vergleichen, und, wenn dieser Abstand (e) unter der Schwelle (eₘᵢₙ) liegt,
- eine Warnmeldung zu erstellen,
wobei die Vorrichtung Mittel zum Bestimmen einer Höhe (ho) umfasst, über die sich das Hindernis (O1) erstreckt, und die elektronische Verarbeitungseinheit dafür programmiert ist:
- die Höhe (ho) mit einer Distanz zu vergleichen, die den Boden und eine Unterkante der Tür (2A) trennt, und
- die Warnmeldung unter Berücksichtigung des Ergebnisses des Vergleichs der Höhe (ho) mit der Distanz, die den Boden und die Unterkante der Tür trennt, zu erstellen.

2. Vorrichtung nach Anspruch 1, wobei die Verarbeitungseinheit (12) so programmiert ist, dass die Darstellung (V) der Tür einen teilweisen Transparenzgrad aufweist.

3. Vorrichtung nach einem der Ansprüche 1 und 2, wobei die elektronische Verarbeitungseinheit (12) dafür programmiert ist:
- andere Bilder (IM₁, IM₂, IM₃) zu erstellen, die darzustellen sind, wobei jedes den Hintergrund (F) sowie eine Darstellung (V) des unteren Teils der Tür (2A), die über diesen Hintergrund gelegt ist, umfasst, wobei der untere Teil der Tür mit einem Öffnungswinkel (α) dargestellt ist, der auf jedem Bild unterschiedlich ist, und
- die Bilder (IM₁, IM₂, IM₃) eins nach den anderen darzustellen.

4. Vorrichtung nach einem der Ansprüche 1 bis 3, wobei die Verarbeitungseinheit (12) einen nichtflüchtigen Speicher aufweist, in dem charakteristische Daten der Geometrie der Tür (2A) gespeichert sind, wobei die Verarbeitungseinheit dafür programmiert ist, die Daten in dem Speicher zu lesen, dann das Bild (IM₁, IM₂, IM₃), das darzustellen ist, in Abhängigkeit von diesen Daten zu erstellen.

5. Vorrichtung nach Anspruch 4, wobei:
- die Daten Koordinaten einer Mehrzahl von Punkten (A1, A2, A3, A4, A5, A6, A7, A8) umfassen, die ein Volumen (V) definieren, das den unteren Teil der Tür (2A) begrenzt, und wobei
- die elektronische Verarbeitungseinheit (12) dafür programmiert ist, die Darstellung des unteren Teils der Tür in Abhängigkeit von den Koordinaten in Form des Volumens (V) zu erzeugen.

6. Vorrichtung nach einem der Ansprüche 1 bis 5, wobei die Verarbeitungseinheit (12) dafür programmiert ist, das Bild (IM₁, IM₂, IM₃) zu erstellen, das anzuzeigen ist, und dessen Anzeige erst nach Empfang einer Angabe zu steuern, die angibt, dass eine Funktionalität des Fahrzeugs betätigt wurde.

7. Vorrichtung nach einem der Ansprüche 1 bis 6, wobei die Verarbeitungseinheit (12) so programmiert ist, dass die Ansicht erfasst wird, wenn sich die Tür (2A) des Fahrzeugs (1) in einer Schließposition befindet.

8. Hilfsverfahren für einen Benutzer (4) eines Fahrzeugs (1), bei dem eine elektronische Verarbeitungseinheit (12) die Erfassung einer Ansicht einer Seitenumgebung (E) dieses Fahrzeugs durch eine Bildaufnahmevorrichtung (11) steuert, die an einer Flanke (5) des Fahrzeugs (1) angeordnet ist,
umfassend die folgenden Schritte, die durch die Verarbeitungseinheit (12) ausgeführt werden:
- Erstellen eines Bilds (IM₁, IM₂, IM₃), das darzustellen ist, umfassend:
- einen Hintergrund (F), der die Seitenumgebung (E) darstellt, der in Abhängigkeit von der erfassten Ansicht bestimmt wird, und
- eine Darstellung (V) nur eines unteren Teils einer Tür (2A) des Fahrzeugs, die über diesen Hintergrund (F) gelegt ist, wobei sich die Tür in einer Öffnungsposition befindet, dann
- Steuern der Anzeige des Bilds (IM₁, IM₂, IM₃) durch einen Anzeigebildschirm (13),
**dadurch gekennzeichnet, dass** es ferner die folgenden Schritte aufweist:
- Bestimmen einer Distanz (do) zwischen der Flanke (5) des Fahrzeugs (1) und einem Hindernis (O1),
- Bestimmen, in Abhängigkeit von der Distanz (do), eines Abstands (e), der das Hindernis (O1) und die Tür (2A) trennen würde, wenn diese Tür tatsächlich in der Öffnungsposition platziert wäre, die einem bestimmten Öffnungswinkel (a) entspricht,
- Bestimmen einer Höhe (ho), über die sich das Hindernis (O1) erstreckt,
- Vergleichen der Höhe (ho) mit einer Distanz, die den Boden und eine Unterkante der Tür (2A) trennt,
- Vergleichen des bestimmten Abstands (e) mit einer vorbestimmten Schwelle (eₘᵢₙ), und, wenn dieser Abstand (e) unter der Schwelle (eₘᵢₙ) liegt, Erstellen einer Warnmeldung, wobei die Warnmeldung ebenfalls das Ergebnis des Vergleichs der Höhe (ho) mit der Distanz, die den Boden und die Unterkante der Tür trennt, berücksichtigt.

## Claims

1. Assistive device (10) for a user (4) of a vehicle (1), comprising an image sensor (11) to be positioned on a side (5) of the vehicle, an electronic processing unit (12) and a display screen (13), the processing unit (12) being programmed to command the image sensor (11) to acquire a view of lateral surroundings (E) of the vehicle (1), the processing unit (12) furthermore being programmed to:
- formulate an image (IM₁, IM₂, IM₃) to be displayed comprising:
- a background (F) representative of said lateral surroundings (E), determined on the basis of the acquired view, and
- superimposed on this background (F), a representation (V) of just a lower part of a door (2A) of the vehicle, said door being in an open position, and then
- command the screen (13) to display said image (IM₁, IM₂, IM₃),
**characterized in that** said assistive device furthermore comprises means for determining a distance (do) between the side (5) of the vehicle (1) and an obstacle (O1), and the electronic processing unit (12) is furthermore programmed to:
- determine, on the basis of said distance (do), a spacing (e) that would separate the obstacle (O1) and the door (2A) if this door were to be effectively placed in the open position corresponding to a given opening angle (α),
- compare this spacing (e) with a predetermined threshold (eₘᵢₙ) and, if this spacing (e) is less than the threshold (eₘᵢₙ),
- formulate an alert message,
the device comprising means for determining a height (ho) over which said obstacle (O1) extends, and the electronic processing unit being programmed to:
- compare said height (ho) with a distance separating the ground and a lower edge of the door (2A), and
- formulate the alert message taking into account the result of the comparison of said height (ho) with the distance separating the ground and the lower edge of the door.

2. Device according to Claim 1, wherein the processing unit (12) is programmed such that the representation (V) of the door has a partial transparency level.

3. Device according to either of Claims 1 and 2, wherein the electronic processing unit (12) is programmed to:
- formulate other images (IM₁, IM₂, IM₃) to be displayed each comprising said background (F) and a representation (V) of the lower part of the door (2A) superimposed on this background, the lower part of the door being shown with a different opening angle (α) in each image, and
- display said images (IM₁, IM₂, IM₃) one after another.

4. Device according to one of Claims 1 to 3, wherein the processing unit (12) includes a non-volatile memory in which characteristic data of the geometry of the door (2A) are stored, the processing unit being programmed to read said data from said memory and then formulate the image (IM₁, IM₂, IM₃) to be displayed on the basis of these data.

5. Device according to Claim 4, wherein:
- said data comprise coordinates of a plurality of points (A1, A2, A3, A4, A5, A6, A7, A8) defining a volume (V) delimiting the lower part of the door (2A), and wherein
- the electronic processing unit (12) is programmed to generate the representation of the lower part of the door on the basis of said coordinates, in the form of said volume (V).

6. Device according to one of Claims 1 to 5, wherein the processing unit (12) is programmed to formulate the image (IM₁, IM₂, IM₃) to be displayed and to command the display thereof only after receiving an item of data indicating that a functionality of the vehicle has been actuated.

7. Device according to one of Claims 1 to 6, wherein the processing unit (12) is programmed such that said view is acquired when the door (2A) of the vehicle (1) is in a closed position.

8. Assistive method for a user (4) of a vehicle (1), during which an electronic processing unit (12) commands an image sensor (11) positioned on a side (5) of the vehicle (1) to acquire a view of lateral surroundings (E) of this vehicle,
comprising the following steps, executed by the processing unit (12):
- formulating an image (IM₁, IM₂, IM₃) to be displayed comprising:
- a background (F) representative of said lateral surroundings (E), determined on the basis of the acquired view, and
- superimposed on this background (F), a representation (V) of just a lower part of a door (2A) of the vehicle, said door being in an open position, and then
- commanding a display screen (13) to display said image (IM₁, IM₂, IM₃),
**characterized in that** it furthermore includes the steps of:
- determining a distance (do) between the side (5) of the vehicle (1) and an obstacle (O1),
- determining, on the basis of said distance (do), a spacing (e) that would separate the obstacle (O1) and the door (2A) if this door were to be effectively placed in the open position corresponding to a given opening angle (α),
- determining a height (ho) over which said obstacle (O1) extends,
- comparing said height (ho) with a distance separating the ground and a lower edge of the door (2A),
- comparing the determined spacing (e) with a predetermined threshold (eₘᵢₙ) and, if this spacing (e) is less than the threshold (eₘᵢₙ), formulating an alert message, said formulation also taking into account the result of the comparison of said height (ho) with the distance separating the ground and the lower edge of the door.
